Europäisches Patentamt

European Patent Office

Office européen des brevets

(11) Veröffentlichungsnummer: **0 056 490
B1**

(12) **EUROPÄISCHE PATENTSCHRIFT**

(45) Veröffentlichungstag der Patentschrift:
10.04.85

(21) Anmeldenummer: 81110762.2

(22) Anmeldetag: 23.12.81

(51) Int. Cl.⁴: **B 62 B 5/02**

(54) **Handkarre.**

(30) Priorität: 15.01.81 DE 8100805 U
03.08.81 DE 8122797 U

(43) Veröffentlichungstag der Anmeldung:
28.07.82 Patentblatt 82/30

(45) Bekanntmachung des Hinweises auf die Patenterteilung:
10.04.85 Patentblatt 85/15

(84) Benannte Vertragsstaaten:
AT BE CH DE FR GB IT LI LU NL SE

(56) Entgegenhaltungen:
DE - B - 1 084 143
FR - A - 2 177 329
GB - A - 902 344
GB - A - 978 636
GB - A - 2 301 341
US - A - 2 763 489
US - A - 3 149 688
US - A - 3 876 022

(73) Patentinhaber: **Rose, Reinhold, Hermannstrasse 47,
D-3470 Höxter 1 (DE)**

(72) Erfinder: **Rose, Reinhold, Hermannstrasse 47,
D-3470 Höxter 1 (DE)**

(74) Vertreter: **Patentanwälte Grünecker, Dr. Kinkeldey, Dr.
Stockmair, Dr. Schumann, Jakob, Dr. Bezold, Meister,
Hilgers, Dr. Meyer-Plath, Maximilianstrasse 58,
D-8000 München 22 (DE)**

## Beschreibung

Die Erfindung betrifft eine Handkarre mit einem im wesentlichen rechteckigen Rahmen, von dessen unterem Ende eine Ladeplattform absteht, der Räder und ein treppengängiges Fahrwerk trägt und der am oberen Ende zwei mit seitlichem Abstand voneinander angeordnete, entgegen der Erstreckungsrichtung der Ladeplattform abgekröpfte Griffstücke aufweist.

Derartige Handkarren können in zur Bodenfläche aufrechter oder geneigter Lage des Rahmens verfahren werden und sie können mittels des treppengängigen Fahrwerks zur Beförderung von Lasten über Treppen herangezogen werden. In allen Fällen ruht die zu befördernde Last im wesentlichen auf der Ladeplattform, während der Rahmen selbst als Stütze für die Last dient.

Bei bekannten Handkarren der eingangs umrissenen Bauart stehen vom oberen Ende des vertikalen Rahmens etwa horizontal zwei Griffe ab, mit denen die Handkarre bewegt und gesteuert werden kann. Diese Art der Griffanordnung ist so lange zufriedenstellend, wie die Handkarre lediglich zum Transport schwerer Güter, etwa Säcke oder Kisten, auf ebenem Boden eingesetzt wird. Wenn jedoch die Handkarre treppengängie Fahrwerke aufweist, um schwere Güter auf einer Treppe nach oben zu befördern, reichen diese Griffe nicht mehr aus, um die Handkarre sicher zu führen und schwere Laster bewältigen zu können.

Der Erfindung liegt die Aufgabe zugrunde, eine Handkarre der eingangs erläuterten Gattung so auszubilden, dass mit dieser bei aufliegender Last die Überwindung eines Höhenunterschiedes unter sicherer Führung und optimalem Einsatz der Körperkräfte der Bedienungsperson möglich ist.

Gemäss der Erfindung wird diese Aufgabe dadurch gelöst, dass am oberen Ende des Rahmens zwei Schulterbügel befestigt sind, die in je einen der beiden als Bügel ausgebildeten Griffstücke übergehen.

Diese Lösung hat gegenüber den bisher bekannten Handkarren den erheblichen Vorteil, dass eine Bedienungsperson unter optimalem Einsatz ihrer Körperkräfte die Handkarre vor allem eine Treppe hinauf sicher führen und vorwärts bewegen kann, weil sie mit den Schultern und dem Rücken die Kräfte des Körpers besser einsetzen kann, als wenn sie nur mit den Händen und Fingern die Handkarre bewegen müsste. Beim Transport auf einer Treppe hinauf lässt sich mit einer Hand die auf den Schultern und dem Rücken hängende Karre führen und mit der ganzen Kraft des Körpers ziehen, während die zweite Hand frei ist, um sich am Treppengeländer abzustützen.

In Weiterbildung der Erfindung ist vorgesehen, dass am bezüglich des Rahmens äussersten Ende jedes Griffstückes wenigstens eine Laufrolle angebracht ist.

Damit ist eine einzige Person in der Lage, eine grosse Last von einer gegenüber dem Boden erhöhten Plattform, beispielsweise vom einen Lastkraftwagen, bis an einen über Treppen zu erreichenden Aufstellungsort bzw. umgekehrt von einem solchen über Treppen zu einem Transportfahrzeug oder dergleichen zu befördern. Dabei wird die Handkarre mit der Last in horizontaler oder annähernd horizontaler Lage des Rahmens auf der Plattform verfahren, dann die Ladeplattform der Handkarre mit der darauf ruhenden Last zum Boden abgesenkt, wobei die Griffstücke zur Plattformkante hin auf den Rollen laufen, und schliesslich die Last unter Führung der Handkarre an den Griffstücken vom Lastkraftwagen wegbefördert. Umgekehrt kann die Last mit der Handkarre auf die Plattform des Lastkraftwagens gehoben werden, indem die Griffstücke mit den Laufrollen auf dieser Plattform abgelegt werden und dann die Handkarre an ihrer Ladeplattform angehoben und auf die Plattform des Lastkraftwagens geschoben wird. Es hat sich gezeigt, dass eine einzige Person auf diese Weise eine Last von ca. 100 Kilogramm allein über den Höhenunterschied zwischen dem Erdboden und der Plattform des Lastkraftwagens befördern kann.

Vorzugsweise sind die Laufrollen an den Enden der Griffstücke als Lenkrollen ausgebildet, so dass sie sich um eine zu ihrer Rollachse rechtwinklige Achse drehen können. Damit ist es möglich, dass die Handkarre auch in liegender Stellung verschoben werden kann, wobei dann der Rahmen, die Laufrollen und die Räder bzw. das treppengängige Fahrwerk die Last tragen.

Es kann von Vorteil sein, eine Arretierung für die als Lenkrollen ausgebildeten Laufrollen vorzusehen, so dass sie bei ihrer Auflage auf einer Plattform beim Anheben oder Absenken der Last nicht seitlich weglaufen können.

Es ist ferner vorteilhaft, wenn die Aussenumfangsfläche der Laufrollen und die Lauffläche der Räder bzw. des treppengängigen Fahrwerks, welche jeweils den grössten Abstand zum Rahmen aufweisen, wenigstens annähernd in einer zum Rahmen parallelen Ebene liegen, um damit für den Rahmen eine annähernd horizontale Lage zu erreichen, wenn die Handkarre auf den Laufrollen ruht.

Bei einer bevorzugten Weiterbildung der Handkarre sind die einstückig mit den Griffstücken ausgebildeten Schulterbügel höhenverstellbar am Rahmen befestigt.

Auf diese Weise können sowohl Schulterbügel als auch Griffstücke an die Körpergrösse der Bedienungsperson angepasst werden.

Es ist vorteilhaft, wenn die Schulterbügel eine Polsterauflage aufweisen und wenn unterhalb der Schulterbügel quer verlaufende Rückenpolster vorgesehen sind.

Nach einem weiteren Merkmal der Erfindung weist der Rahmen Befestigungsösen oder dergleichen für Schultergurte auf. Damit ist die Möglichkeit gegeben, beim Transport eine Treppe hinunter das Gewicht der Ladung über einen Schultergurt mit dem Oberkörper zurückzuhalten. Bei der Fahrt eine Treppe hinunter genügt es, wenn die Bedienungsperson mit einer Hand die Handkarre führt, weil mit dem Schultergurt die Last zurückgehalten wird; auf diese Weise ist die zweite Hand frei, um sich am Treppengeländer abzustützen.

Bei schweren Lasten, die eine einzige Person nicht transportieren kann, kann eine zweite Person mittels eines Schultergurtes ziehen helfen oder aber hinter der Handkarre hergehen und schieben helfen. Zu diesem Zweck ist es vorteilhaft, wenn auf das freie Ende der Ladeplattform ein Griffbügel aufsteckbar ist.

Weitere Merkmale und Vorteile der Erfindung ergeben sich aus der folgenden Beschreibung von Ausführungsbeispielen, die in der Zeichnung dargestellt sind.
Es zeigen:

Figur 1 eine Seitenansicht einer erfindungsgemäss ausgebildeten Handkarre mit treppengängigem Fahrwerk und Schulterbügeln,

Figur 2 eine Vorderansicht der in Fig. 1 gezeigten Handkarre,

Figur 3 eine Handkarre der Figuren 1 und 2 beim Einsatz auf ebenem Gelände,

Figur 4 eine Handkarre beim Transport eine Treppe hinauf,

Figur 5 eine Handkarre beim Transport eine Treppe hinunter,

Figur 6 eine abgeänderte Ausführungsform der Handkarre mit einer zweiten Ladeplattform, die in der Höhe verstellbar ist,

Figur 7 die Handkarre gemäss Fig. 6 beim Transport auf ebenem Gelände, jedoch ohne treppengängige Fahrwerke,

Figur 8 den Einsatz einer Handkarre mit aufgestecktem Griffbügel eine Treppe hinauf durch zwei Personen,

Figur 9 den Einsatz der Handkarre eine Treppe hinauf durch zwei Personen, von denen die eine ziehen hilft,

Figur 10 eine Seitenansicht einer abgeänderten Ausführungsform mit Laufrollen am Ende jedes Griffstücks,

Figur 11 die Handkarre der Fig. 10 in einer ersten Phase zum Aufbringen einer Last auf eine Plattform eines Lastkraftwagens und

Figur 12 eine weitere Phase des Beladevorgangs, bei der sich die Last schon nahezu vollständig auf der Plattform des Lastkraftwagens befindet.

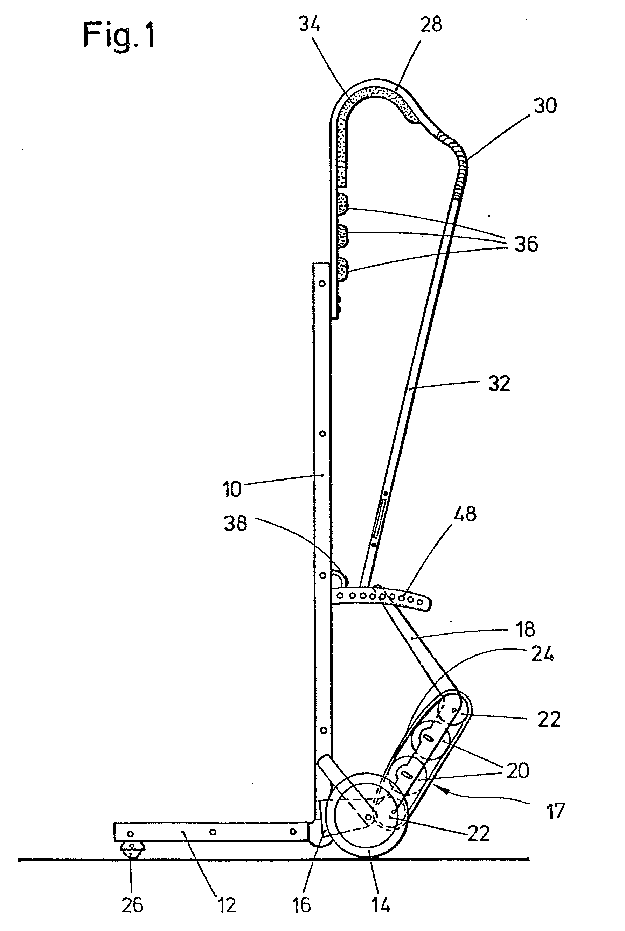

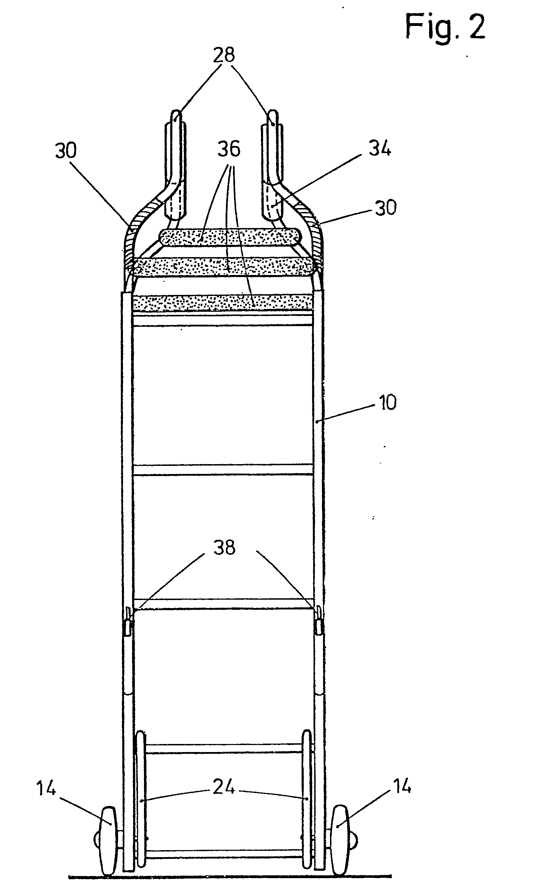

Wie die Figuren 1 und 2 zeigen, weist die Handkarre nach dem ersten Ausführungsbeispiel der Erfindung einen im wesentlichen vertikalen Rahmen 10 auf, von dessen unterem Ende rechtwinklig eine Ladeplattform 12 absteht. Am unteren Ende des Rahmens 10 sind ferner für die Fahrt auf ebenem Boden zwei Räder 14 befestigt, die in fest mit dem Rahmen 10 verbundenen Armen 16 gelagert sind. Zwei weitere Fahrwerke 17 sind treppengängig und bestehen zu diesem Zweck aus zwei an beiden Seiten des Rahmens 10 abnehmbar befestigten Bügeln 18, zwischen denen Stützrollen 20 sowie zwei Umlenkrollen 22 gelagert sind, über die zwei Transportriemen 24 geführt sind. Die Bügel 18 sind in ihrer Neigung verstellbar, um die treppengängigen Fahrwerke 17 der jeweiligen Treppenneigung anpassen zu können. Hierzu ist für jeden Bügel 18 am Rahmen 10 eine bogenförmige Lasche 48 befestigt, die mit Löchern zur Arretierung des oberen Bügelendes mittels Bolzen oder dergleichen versehen ist.

Wie Figur 1 zeigt, trägt das freie Ende der Ladeplattform 12 Lenkrollen 26.

Am oberen Ende des Rahmens 10 sind zwei Schulterbügel 28 befestigt, die in je ein als Bügel ausgebildetes Griffstück 30 übergehen. Die beiden Griffstücke 30 sind mit einem Griffband umwickelt, um den Händen einen festen Halt zu geben. Sie laufen in je eine gerade Stange 32 aus, deren freie Enden sich an dem Rahmen 10 abstützen. Die einstückig mit den Griffstücken 30 ausgebildeten Schulterbügel 28 sind höhenverstellbar am Rahmen 10 befestigt, um eine Anpassung an die Körpergrösse der Bedienungsperson vornehmen zu können.

Die Schulterbügel 28 sind mit einer Polsterauflage 34 versehen, und unterhalb der Schulterbügel 28 sind quer verlaufende Rückenpolster 36 vorgesehen.

Am Rahmen 10 sind beidseitig zwei Befestigungsösen 38 für einen Schultergurt 40 angebracht.

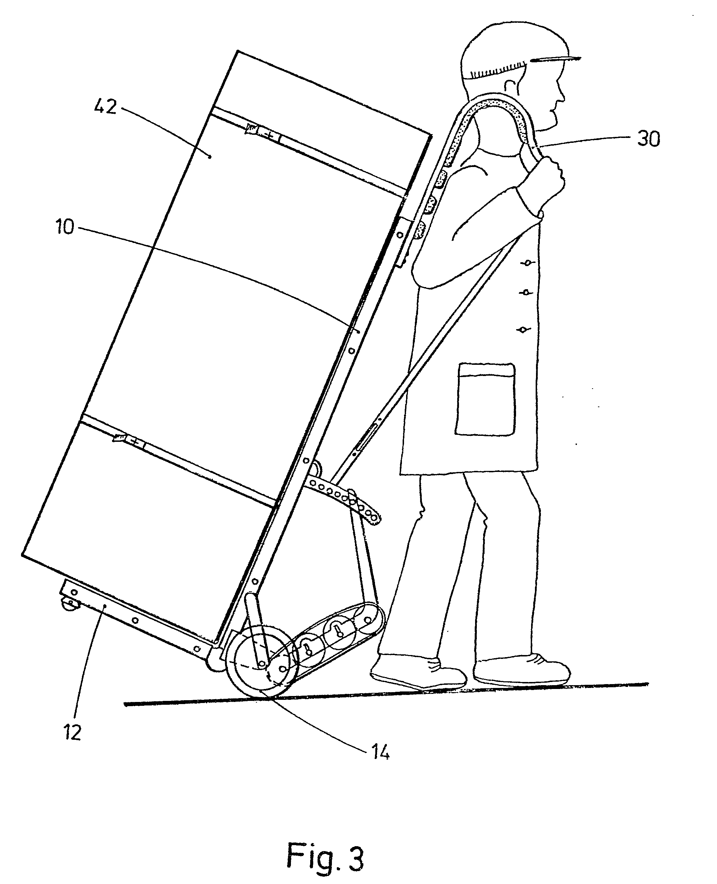

Figur 3 zeigt den Einsatz der Handkarre für den Transport einer schweren Last 42, beispielsweise eines Möbelstückes, auf ebenem Boden. Dabei ist zu erkennen, dass die Bedienungsperson lediglich an den beiden Griffstücken 30 angreifen muss, um die Last vorwärts zu bewegen, wobei der Blick nach vorn frei ist. Bei dieser Art des Transportes wird die Tatsache ausgenutzt, dass sich eine Last leichter ziehen als schieben lässt, insbesondere dann, wenn der Boden nicht ganz glatt ist, beispielsweise auf Kieswegen.

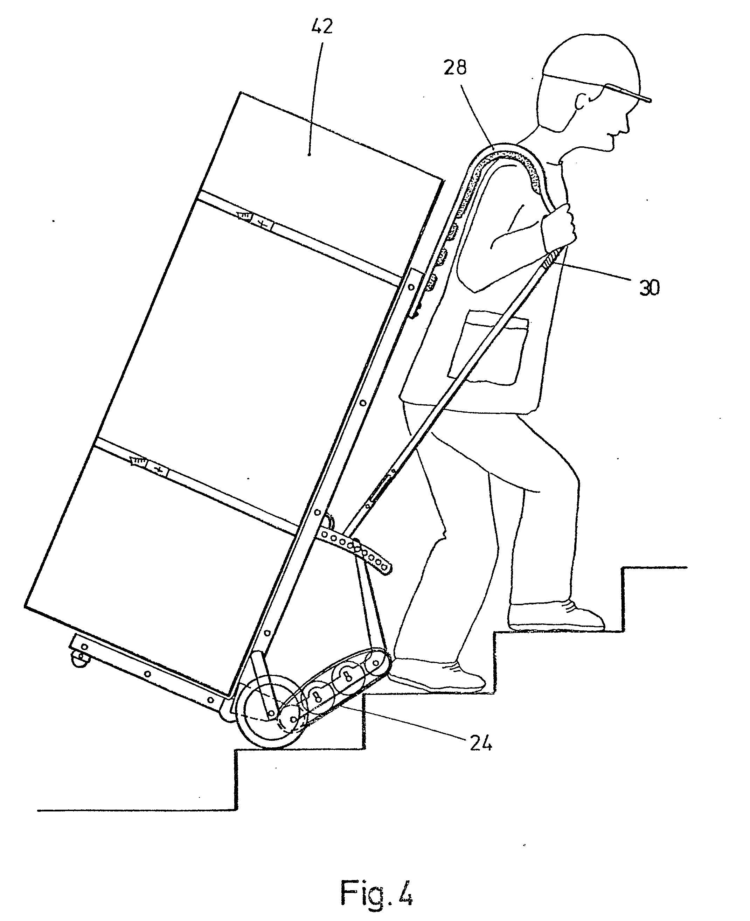

Bei dem in Figur 4 gezeigten Transport einer schweren Last 42 eine Treppe hinauf wird die Handkarre über die treppengängigen Fahrwerke 17 mit den beiden Transportriemen 24 gezogen, wobei die Schultern der Bedienungsperson an den Schulterbügeln 28 angreifen. Zum Führen der Handkarre genügt es, wenn eine Hand an einem Griffstück 30 angreift, so dass sich die andere Hand am Treppengeländer abstützen kann.

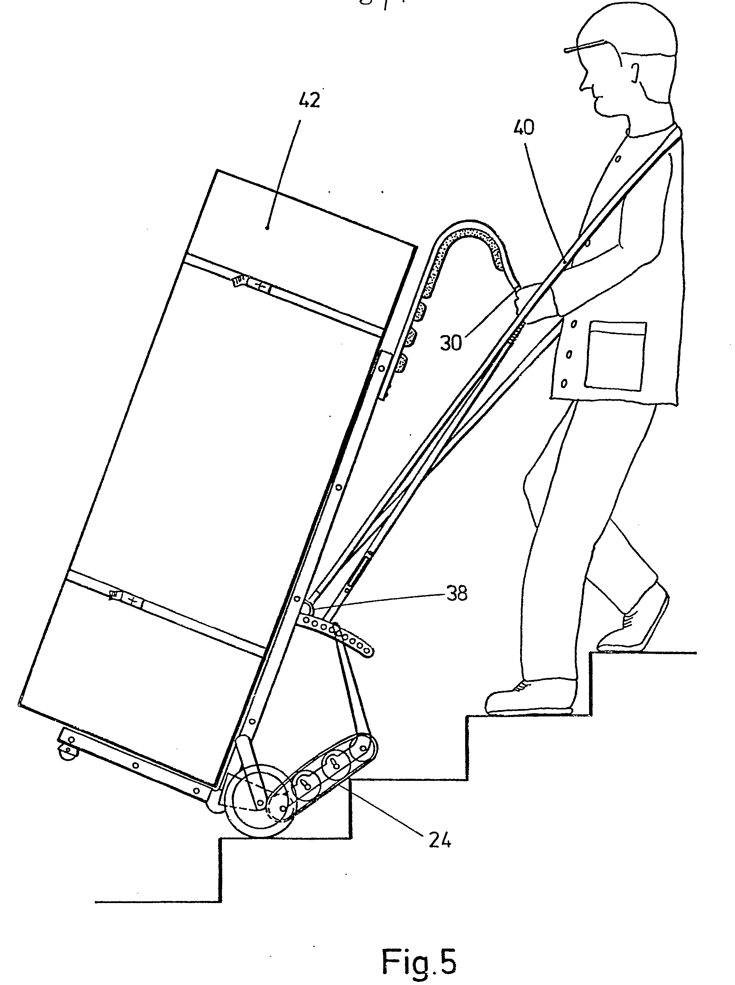

Bei dem in Figur 5 gezeigten Einsatzfall wird eine schwere Last 42 eine Treppe hinunter befördert, wobei das Gewicht der Last 42 über einen Schultergurt 40 von der Bedienungsperson zurückgehalten wird, während zur Führung der Handkarre nur eine Hand an einem Griffstück 30 angreift und die andere Hand zur Abstützung am Treppengeländer frei ist.

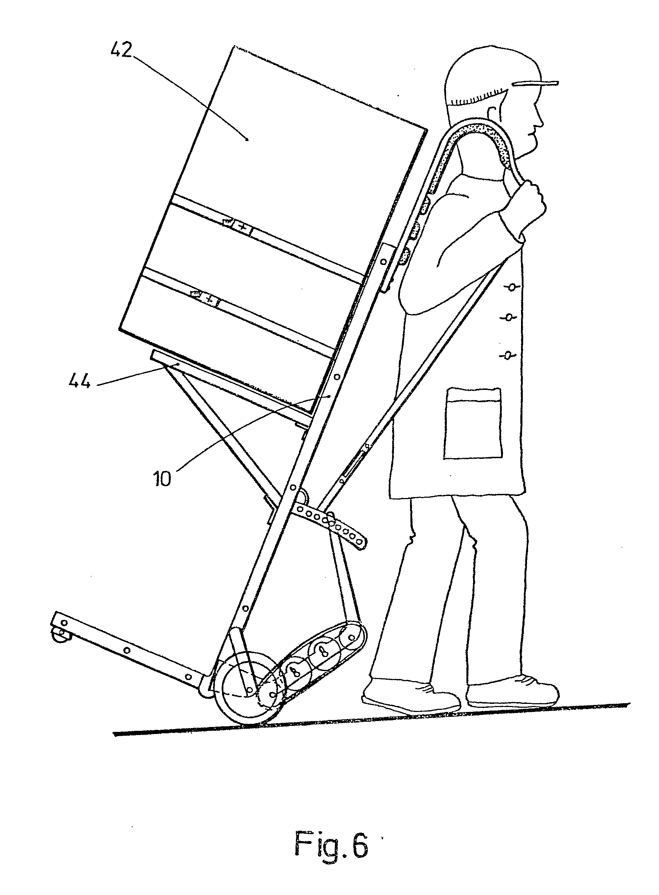

Bei der in Figur 6 gezeigten Variante ist am Rahmen 10 der Handkarre eine weitere Ladeplattform 44 höhenverstell- und abnehmbar befestigt, so dass das Gewicht der Last 42 weiter nach oben verlegt werden kann.

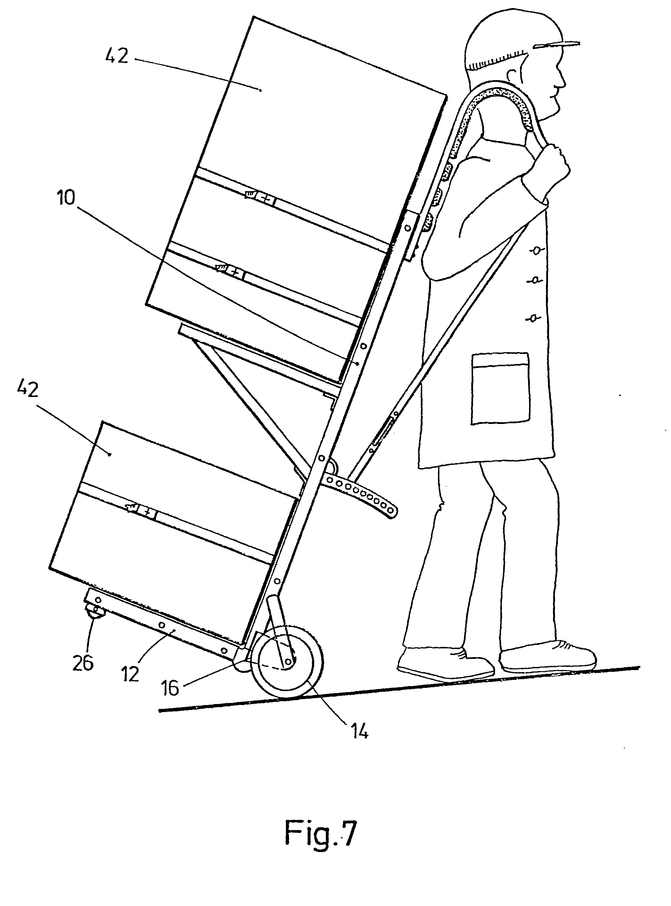

Bei dem in Figur 7 gezeigten Einsatzfall sind die treppengängigen Fahrwerke weggelassen, da für die Fortbewegung auf ebenem Boden die beiden Räder 14 genügen. Bei Transporten auf ebenem Gelände bietet die Handkarre den grossen Vorteil, dass man auch bei beengten Platzverhältnissen, beispielsweise in Gärtnereien mit engen Wegen, in landwirtschaftlichen Betrieben, Druckereien oder dergleichen Transporte angenehm durchführen kann, weil der Platzbedarf bei Transporten durch enge Gänge und Türen gering ist. Die Lenkrollen 26 am freien Ende der Ladeplattform 12 erlauben ein seitliches Verschieben der Handkarre, was insbesondere bei den geschilderten, engen Raumverhältnissen sehr vorteilhaft ist. Hierzu wird die Handkarre angekippt, so dass sich die Räder 14 vom Boden abheben. Es ist auch möglich, die beladene Handkarre aufrecht stehend zu schieben. Auf diese Weise hat man beispielsweise beim Transport eines schweren und grossen Möbelstückes die Möglichkeit, in dem Raum, in dem das Möbelstück aufgestellt werden soll, die Handkarre zusammen mit dem Möbelstück bis an den vorgesehenen Platz zu schieben.

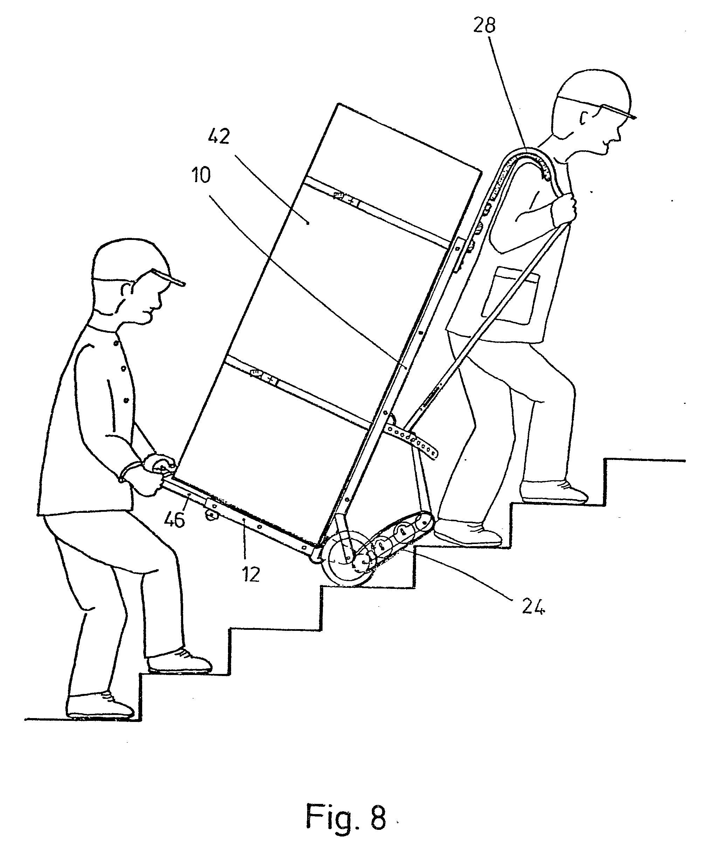

In Figur 8 ist gezeigt, dass auf das freie Ende der Ladeplattform 12 ein Griffbügel 46 aufsteckbar ist. Damit kann eine zweite Person hinter der Handkarre hergehen und schieben helfen, während die ziehende Person an den Schulterbügeln 28 angreift und die Transportkarre an einem Griffstück 30 führt.

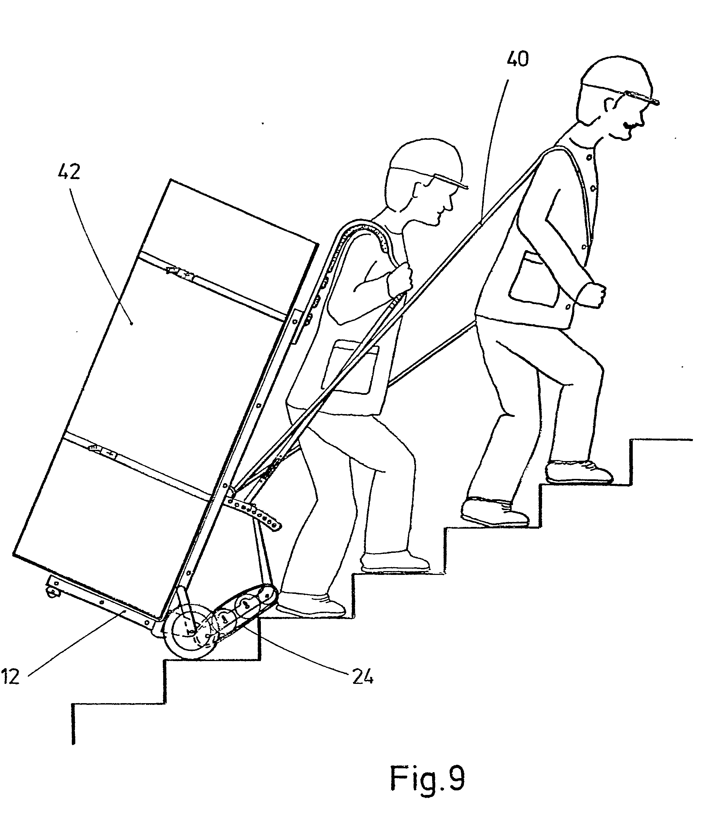

Figur 9 zeigt schliesslich, wie eine zweite Person mittels des Schultergurtes 40 treppauf ziehen helfen kann.

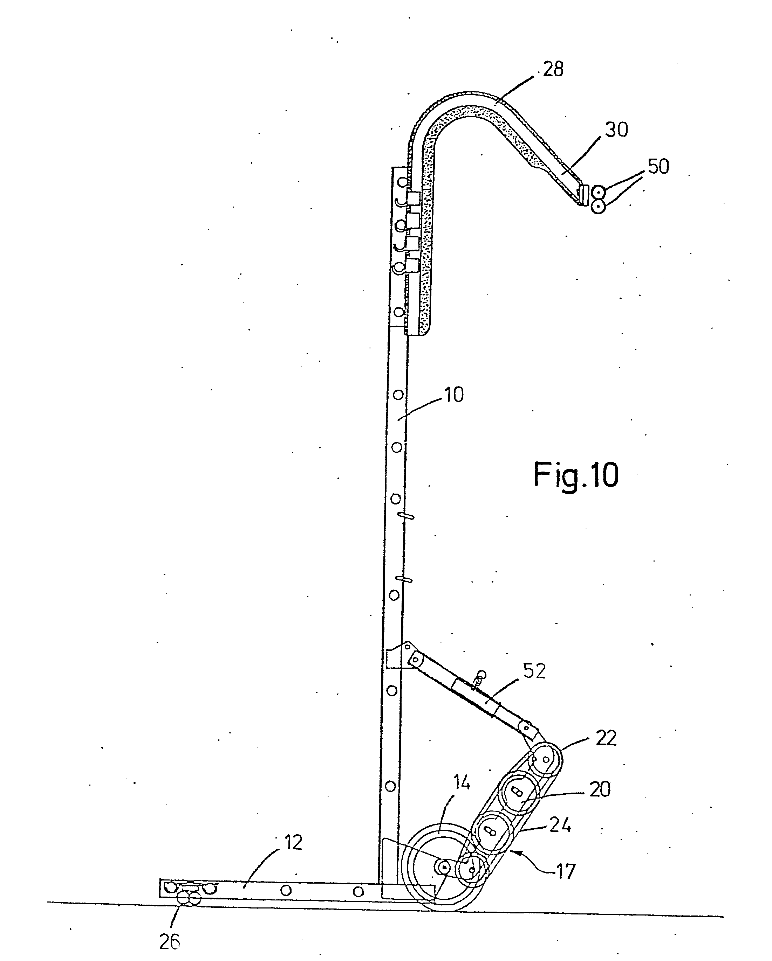

Beim Ausführungsbeispiel der Figur 10 sind am freien Ende eines jeden Griffstücks 30 Laufrollen 50 angebracht, und zwar wenigstens eine an jedem Griffstück 30. Vorteilhafterweise sind die Laufrollen 50 als Lenkrollen ausgebildet, so dass das griffstückseitige Ende der Handkarre um die Räder 14 bogenförmig verfahrbar ist.

Die den grössten Abstand zum Rahmen 10 aufweisende Aussenumfangsfläche der Laufrollen 50 und die zum Rahmen 10 den grössten Abstand aufweisende Aussenumfangsfläche des Laufwerks 14 bzw. 17 sollen wenigstens annähernd in einer zum Rahmen 10 parallelen Ebene liegen, so dass der Rahmen, wenn er liegend verwendet wird, annähernd horizontal ist.

Bei dem in den Zeichnungen gezeigten, treppengängigen Fahrwerk 17 ist eine Verstellvorrichtung 52 vorgesehen, um das Fahrwerk 17 unterschiedlichen Treppensteigungen anpassen zu können. Damit kann dann auch die Lage des Rahmens 10 gegenüber dem Boden bestimmt werden.

Der Rahmen 10 ist selbst entweder in seiner Länge verstellbar ausgebildet, indem er beispielsweise aus zwei gegeneinander verschiebbaren Teilen besteht, oder es sind die Griffstücke 30 so ausgebildet, dass sie am Rahmen 10 in dessen Längsrichtung versetzt werden können. Es soll mit diesen Massnahmen eine Anpassung der Handkarre an verschiedene zu überwindende Höhenunterschiede bzw. an lange oder hohe Güter erreicht werden.

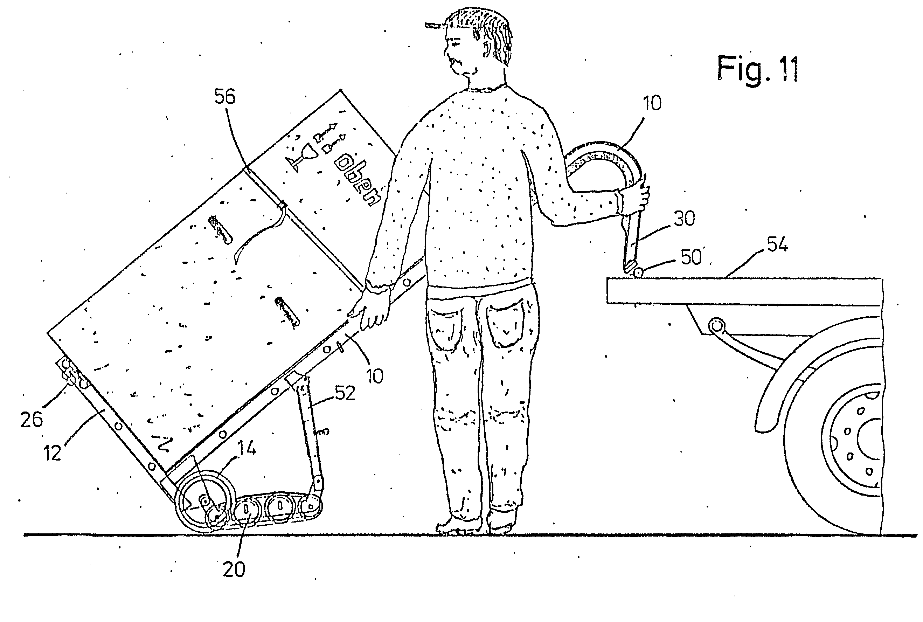

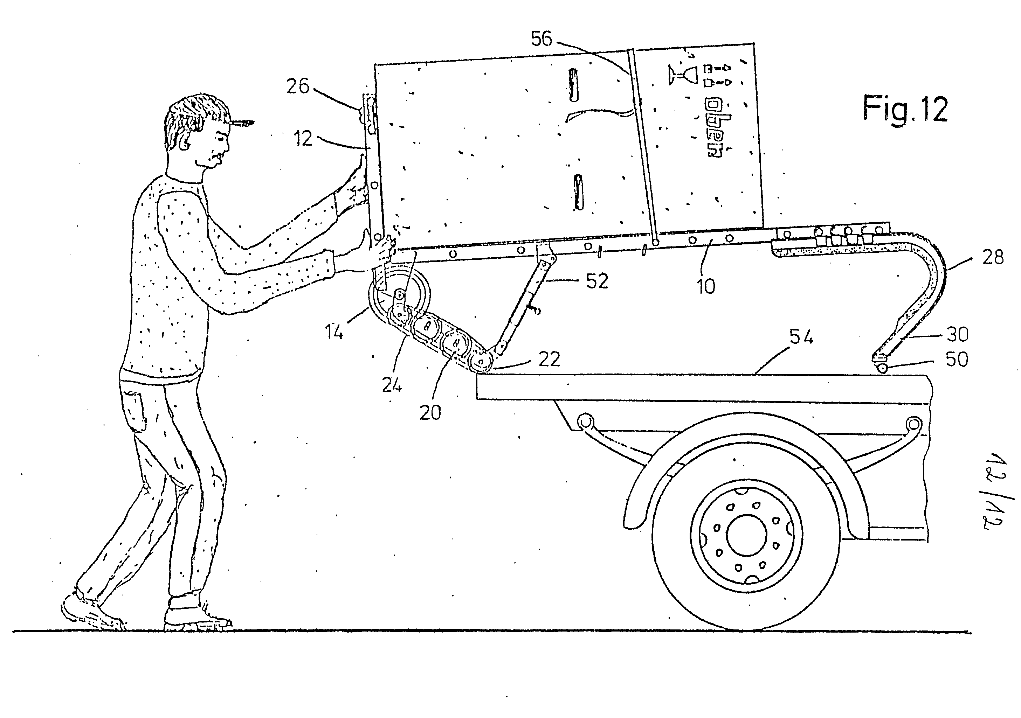

Wie Figur 11 zeigt, werden zum Aufladen einer auf der Handkarre ruhenden Last die Laufrollen 50 auf der Plattform 54 eines Lastkraftwagens aufgelegt. Durch Anheben des fahrwerkseitigen Endes der Handkarre und durch Verfahren mit Hilfe der Laufrollen 50 kann, wie Figur 12 zeigt, die Handkarre mit der Last bequem auf die Plattform 54 geladen werden. Die Ladeplattform 12 und der Rahmen 10 geben hierbei der Last sicheren Halt, die natürlich zusätzlich noch an der Handkarre gehalten werden kann, z.B. mittels eines oder mehrerer Gurte 56.

Zum Abladen der Last läuft der Vorgang umgekehrt ab (zuerst die Phase gemäss Figur 12, dann die Phase gem. Figur 11). Die Last kann mit der Handkarre stehend, d.h. auf den Rädern 14 und Lenkrollen 26 rollend, oder liegend, d.h. auf den äussersten Umlenkrollen 22 der treppengängigen Fahrwerke 17 und auf den Laufrollen 50 rollend, transportiert werden.

Mit der Handkarre gemäss der Erfindung können die verschiedensten Güter transportiert werden. Zur Anpassung an diese können an der Handkarre Zusatzvorrichtungen befestigt werden, um beispielsweise Behälter für Flüssigkeiten sicher zu befestigen. Weitere Möglichkeiten sind die Befestigung von Haken zum Einhängen von Rinder- oder Schweinehälften, die Befestigung einer Haltevorrichtung für schwere Fahrzeugreifen, die Einhängung von Kästen für den Transport von Pflanzen oder die Befestigung eines Sitzes zum Transport kranker oder körperbehinderter Menschen.

## Patentansprüche

1. Handkarre mit einem im wesentlichen rechteckigen Rahmen (10), von dessen unterem Ende eine Ladeplattform (12) absteht, der Räder (14) und ein treppengängiges Fahrwerk (17) trägt und der am oberen Ende zwei mit seitlichem Abstand zueinander angeordnete, entgegen der Erstreckungsrichtung der Ladeplattform (12) abgekröpfte Griffstücke (30) aufweist, dadurch gekennzeichnet, dass am oberen Ende des Rahmens (10) zwei Schulterbügel (28) befestigt sind, die in je einen der beiden als Bügel ausgebildeten Griffstücke (30) übergehen.

2. Handkarre nach Anspruch 1, dadurch gekennzeichnet, dass am bezüglich des Rahmens (10) äussersten Ende jeden Griffstückes (30) wenigstens eine Laufrolle (50) angebracht ist.

3. Handkarre nach Anspruch 1 oder 2, dadurch gekennzeichnet, dass die Laufrollen (50) als Lenkrollen ausgebildet sind.

4. Handkarre nach einem der Ansprüche 1 bis 3, dadurch gekennzeichnet, dass die Aussenumfangsfläche der Laufrollen (50) und die Lauffläche der Räder (14) bzw. des treppengängigen Fahrwerks (17), welche jeweils den grössten Abstand zum Rahmen (10) aufweisen, wenigstens annähernd in einer zum Rahmen (10) parallelen Ebene liegen.

5. Handkarre nach einem der Ansprüche 1 bis 4, dadurch gekennzeichnet, dass die einstückig mit den Griffstücken (30) ausgebildeten Schulterbügel (28) höhenverstellbar am Rahmen (10) befestigt sind.

6. Handkarre nach einem der Ansprüche 1 bis 5, dadurch gekennzeichnet, dass die Schulterbügel (28) eine Polsterauflage (34) aufweisen.

7. Handkarre nach einem der Ansprüche 1 bis 6, dadurch gekennzeichnet, dass unterhalb der Schulterbügel (28) quer verlaufende Rückenpolster (36) vorgesehen sind.

8. Handkarre nach einem der vorhergehenden Ansprüche, dadurch gekennzeichnet, dass der Rahmen (10) Befestigungsösen (38) oder dergleichen für Schultergurte (40) aufweist.

9. Handkarre nach einem der vorhergehenden Ansprüche, dadurch gekennzeichnet, dass auf das freie Ende der Ladeplattform (12) ein Griffbügel (46) aufsteckbar ist.

10. Handkarre nach einem der vorhergehenden Ansprüche, dadurch gekennzeichnet, dass das freie Ende der Ladeplattform (12) Lenkrollen (26) trägt.

11. Handkarre nach einem der vorhergehenden Ansprüche, dadurch gekennzeichnet, dass jedes treppengängige Fahrwerk (17) aus zwei über koaxiale Rollen (20, 22) geführten Transportriemen (24) besteht.

12. Handkarre nach Anspruch 7, dadurch gekennzeichnet, dass die treppengängigen Fahrwerke (17) in der Neigung verstellbar am Rahmen (10) befestigt sind.

13. Handkarre nach Anspruch 11 oder 12, dadurch gekennzeichnet, dass die treppengängigen Fahrwerke (17) abnehmbar am Rahmen (10) befestigt sind.

14. Handkarre nach einem der vorhergehenden Ansprüche, dadurch gekennzeichnet, dass am Rahmen (10) weitere Ladeplattformen (44) höhenverstellbar und abnehmbar befestigt sind.

## Revendications

1. Charrette à bras comportant un châssis (10) essentiellement rectangulaire, à partir de l'extrémité inférieure duquel fait saillie une plateforme de chargement (12), qui porte des roues (14) et un train de roulement (17) pouvant franchir des escaliers et qui comporte, à son extrémité supérieure, deux éléments de préhension (30) disposés avec un certain espacement latéral relatif et recourbés en sens inverse du sens dans lequel s'étend la plateforme de chargement (12), caractérisée en ce qu'à l'extrémité supérieure du châssis (10) sont fixées deux épaulières (28), qui se prolongent chacune par un des deux éléments de préhension (30), agencés en forme d'étrier.

2. Charrette à bras suivant la revendication 1, caractérisée en ce qu'à l'extrémité de chaque élément de préhension (30) qui est placé de plus à l'extérieur par rapport au châssis (10), il est disposé au moins une roulette (50).

3. Charrette à bras suivant une des revendications 1 et 2, caractérisée en ce que les roulettes (50) sont des roulettes de guidage.

4. Charrette à bras suivant une des revendications 1 à 3, caractérisée en ce que le pourtour des roulettes (50) et la surface de roulement des roues (14) et/ou du train de roulement (17) apte à franchir les escaliers, qui présentent respectivement l'espace maximal par rapport au châssis (10), sont au moins approximativement dans un plan parallèle à ce dernier.

5. Charrette à bras suivant une des revendications 1 à 4, caractérisée en ce que les épaulières (28), exécutées d'une pièce avec les éléments de préhension (30), sont fixées au châssis (10) de manière réglable verticalement.

6. Charrette à bras suivant une des revendications 1 à 5, caractérisée en ce que les épaulières (28) comportent un appui capitonné (34).

7. Charrette à bras suivant une des revendications 1 à 6, caractérisée en ce qu'il est prévu, en dessous des épaulières (28), des capitonnages dorsaux (36) s'étendant transversalement.

8. Charrette à bras suivant und des revendications précédentes caractérisée en ce que le châssis (10) comporte des oeillets de fixation (38) ou analogues pour des bretelles (40).

9. Charrette à bras suivant une des revendications précédentes, caractérisée en ce qu'un étrier de préhension (46) peut être emmanché à l'extrémité libre de la plateforme de chargement (12).

10. Charrette à bras suivant une des revendications précédentes, caractérisée en ce que l'extrémité libre de la plateforme (12) porte des roulettes de guidage (26).

11. Charrette à bras suivant une des revendications précédentes, caractérisée en ce que chaque train de roulement (17) apte à franchir des escaliers se compose de deux courroies de transport (24) guidées sur des galets coaxiaux (20, 22).

12. Charrette à bras suivant la revendication 7, caractérisée en ce que les trains de roulement (17) aptes à franchir des escaliers sont fixés au châssis (10), leur inclinaison pouvant être réglée.

13. Charrette à bras suivant une des revendications 11 et 12, caractérisée en ce que les trains de roulement (17) apte à franchir des escaliers sont fixés amovibles sur le châssis (10).

14. Charrette à bras suivant une des revendications précédentes, caractérisée en ce que d'autres plateformes de chargement (44), réglables en hauteur et amovibles, sont fixées sur le châssis (10).

## Claims

1. A handtruck having an essentially rectangular frame (10) from the bottom end of which a loading platform (12) sticks out and which carries wheels (14) and a travelling mechanism (17) for negotiating stairs and which at the top end exhibits two grips (30) arranged at a distance apart laterally and offset from the direction longitudinal to the loading platform (12), characterized in that to the top end of the frame (10) two shoulderhoops (28) are attached, which continue into the respective grips (30) which are constructed as loops.

2. A handtruck as in Claim 1, characterized in that at the extreme end of each grip (30) with respect to the frame (10) it is fitted with at least one roller (50).

3. A handtruck as in Claim 1 or 2, characterized in that the rollers (50) are made as casters.

4. A handtruck as in one of the Claims 1 to 3, characterized in that the outer peripheral area of the rollers (50) and the tread of the wheels (14) or respectively of the travelling mechanism (17) for negotiating staris, which exhibit respectively the greatest distance from the frame (10), lie at least approximately in one plane which is parallel with the frame (10).

5. A handtruck as in one of the Claims 1 to 4, characterized in that the shoulder-hoops (28) made in one piece with the grips (30) are attached to the frame (10) to be adjustable for height.

6. A handtruck as in one of the Claims 1 to 5, characterized in that the shoulder-hoops (28) exhibit a padded lining (34).

7. A handtruck as in one of the Claims 1 to 6, characterized in that underneath the shoulder-hoops (28) back-pads (36) are provided, running across.

8. A handtruck as in one of the preceding Claims, characterized in that the frame (10) exhibits fixing-eyes (38) or the like for shoulder-straps (40).

9. A handtruck as in one of the preceding Claims, characterized in that on the free end of the loading platform (12) an auxiliary handle (46) may be plugged in.

10. A handtruck as in one of the preceding Claims characterized in that the free end of the loading platform (12) carries casters (26).

11. A handtruck as in one of the preceding Claims, characterized in that each travelling mechanism (17) for negotiating stairs consists of two conveyor belts (24) carried over coaxial rollers (20, 22).

12. A handtruck as in Claim 7, characterized in that the travelling mechanisms (17) for negotiating stairs are attached to the frame (10) to be adjustable for slope.

13. A handtruck as in Claim 11 or 12, characterized in that the travelling mechanisms (17) for negotiating stairs are fixed detachably to the frame (10).

14. A handtruck as in one of the preceding Claims, characterized in that further loading platforms (44) are attached to the frame (10), which are adjustable for height and are detachable.

Fig.1

Fig. 2

**Fig. 3**

4/12

Fig.4

Fig.5

6/12

Fig.6

Fig.7

Fig. 8

9/12

Fig.9

28

30

50

10

Fig.10

52

22

20

24

14

17

12

26

Fig. 11

Fig. 12

56

26

12

52

10

28

14

30

24

50

20

22

54

0 056 490

12/12